# EUROPEAN PATENT APPLICATION

(11) **EP 2 640 033 A1**
(43) Date of publication of application: **18.09.2013**
(21) Application number: 13158419.5
(22) Date of filing: 08.03.2013
(51) Int. Cl.: H04L 29/06

(54) **Hardware protocol stack**

(30) Priority: 15.03.2012 KR 20120026542
(71) Applicant: LSIS Co., Ltd., Dongan-gu, Anyang-si Gyeonggi-do 431-080 (KR)
(72) Inventor: Lee, Soo Gang, 431-743 Gyeonggi-do (KR); Kwon, Dae Hyun, 431-830 Gyeonggi-do (KR)
(74) Representative: Karlsson, Leif Gunnar Börje

(57) **Abstract**

Disclosed is a hardware protocol stack, where header information of analysis-subjected protocol is stored in a register unit, comparison is made whether information recorded in the header of inputted frame mutually matches header information stored in the register unit, and data is extracted as a result of the comparison.

## Description

### BACKGROUND OF THE DISCLOSURE

### 1. Field of the Disclosure

The present disclosure relates to a hardware protocol stack.

### 2. Discussion of the Related Art

Generally, a protocol stack is a device configured to automatically interpret protocols, which may be divided to a software protocol stack for software implementation, and a hardware protocol stack for hardware implementation.

Each frame of protocol includes head information and a FCS (Frame Check Sequence) inserted into a distal end of the frame for error detection at reception side, and header required in each protocol is defined.

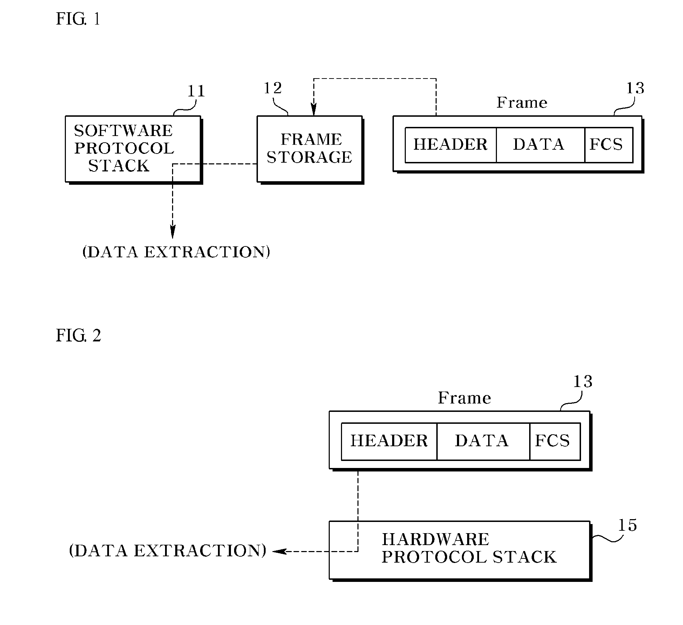

FIG. 1 illustrates a process extracting data from a frame using a software protocol stack. Referring to FIG.1, in a case a frame 13 is inputted, a relevant device stores the frame 13 on a frame storage 12, where a software protocol stack 11 reads out the stored frame and analyzes a header. Furthermore, the software protocol stack checks where there is any error in a relevant frame 13 or extracts data of the relevant frame.

FIG.2 illustrates a process extracting data from a frame using a hardware protocol stack. Referring to FIG.2, in a case a frame 13 is inputted, the frame 13 is not stored in the storage and data is instantly extracted from a hardware protocol stack 15.

Although the software protocol stack 11 requires no additional hardware resources, the software protocol stack suffers from a disadvantage in that a processing time is lengthened because of interpretation of protocol in a software method. Meanwhile, although the hardware protocol stack 15 requires additional hardware resources, the hardware protocol stack has a significantly and advantageously faster processing time over that of software protocol stack.

Use of protocol stack can greatly reduce a development time as data is automatically extracted from a frame. That is, the development time can be shortened, because, in developing a device processing a new protocol, a relevant stack is purchased and applied, and only thing is to develop an interface with the stack even though a user is ignorant of protocol thereof.

However, a conventional protocol stack product is designed to process only information related to each intrinsic protocol albeit interpreting protocols. Hence, the conventional protocol stack product suffers from disadvantages in that it requires much development time, efforts, and costs because a user must go through a process of personally interpreting protocols in order to personally define or process protocols not provided by commercial stack products.

### SUMMARY OF THE DISCLOSURE

The present disclosure is directed to cope with the abovementioned problems/disadvantages and to provide a hardware protocol stack configured to allow a user to quickly process a personally proclaimed protocol by developing an automatic interpretation function fixed for each type of protocol.

In a general aspect of the present disclosure, there is provided a hardware protocol stack, the hardware protocol stack comprising: a register unit configured to store header information of protocol to be analyzed; a comparator configured to compare if information recorded in a header of inputted frame is matched to the header information stored in the register unit; and an interface logic unit configured to extract data of the frame in response to a comparative result by the comparator.

In some exemplary embodiments, the register unit may be configured in a readable format.

In some exemplary embodiments, the hardware protocol stack may further comprise an interface unit configured to set the header information in the register unit.

In some exemplary embodiments, the register unit may comprise a plurality of registers storing mutually different header information.

In some exemplary embodiments, the comparator sequentially may compare the information recoreded in the header of inputted frame with the header information stored in the plurality of registers.

In some exemplary embodiments, the interface logic unit may transmit each extracted data in response to a header information-matched register.

In some exemplary embodiments, the register unit, the comparator and the interface logic unit may be formed on a single IC (Integrated Circuit).

According to the present disclosure thus configured, a user can interpret a relevant protocol by setting relevant information related to analysis-subjected protocol at a register, whereby a frame analysis function applied only to a protocol provided by a protocol stack provider can be advantageously expanded to enable processing an arbitrary protocol not provided by a commercial protocol stack or defined by a user.

The hardware protocol stack according to the exemplary embodiments of the present disclosure has an advantageous effect in that flexibility and expandability to protocol are excellent because only thing is for a user to set header information on a register, hardware protocol stack can be realized by a user with less effort for developing a device applied by a new protocol, and development time of various devices processing arbitrary protocols can be shortened by utilizing a speedy data-processing characteristic of hardware protocol stack to thereby promote an enhanced performance.

### BRIEF DESCRIPTION OF THE DRAWINGS

The accompanying drawings, which are included to provide a further understanding of the present disclosure and are incorporated in the present disclosure and constitute a part of this application, and together with the description, serve to explain the principle of the disclosure. In the drawings:
FIG.1 is an exemplary view illustrating a concept of a software protocol stack according to prior art;
FIG.2 is an exemplary view illustrating a hardware protocol stack according to prior art;
FIG. 3 is a schematic conceptual view illustrating a hardware protocol stack according to an exemplary embodiment of the present disclosure;
FIG.4 is a schematic conceptual view illustrating a hardware protocol stack according to another exemplary embodiment of the present disclosure; and
FIG.5 is a mimetic view illustrating an operation of a hardware protocol stack having a plurality of registers according to the present disclosure.

### DETAILED DESCRIPTION

Advantages and features of the present disclosure may be understood more readily by reference to the following detailed description of exemplary embodiments and the accompanying drawings. Thus, the present disclosure is not limited to the exemplary embodiments which will be described below, but may be implemented in other forms. Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification.

Now, a hardware protocol stack according to the exemplary embodiments of the present disclosure will be described in detail with reference to the accompanying drawings.

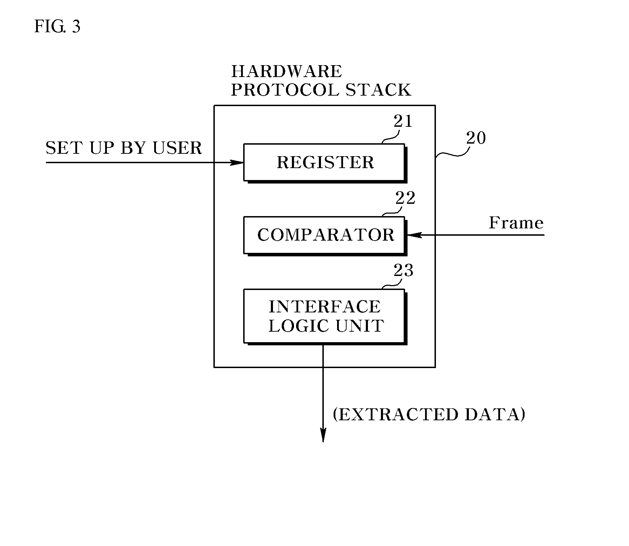

FIG. 3 is a schematic conceptual view illustrating a hardware protocol stack according to an exemplary embodiment of the present disclosure.

Referring to FIG.3, a hardware protocol stack 20 according to an exemplary embodiment of the present disclosure comprises a register 21, a comparator 22 and an interface logic unit 23. Devices using the hardware protocol stack 20 according to an exemplary embodiment of the present disclosure may vary as the need arises. For example, the hardware protocol stack 20 may be installed on network interface cards, digital TVs, media player, mobile terminals and Personal Computers for use of protocol interpretation, but the present disclosure is not limited thereto.

The register 21 may store header information of an analysis-subjected protocol, and a user may set at the register 21 the header information of protocol not provided by commercial stack products or personally defined for development. The register 21 may be writably configured to allow a user to set the header information as the need arises. In relation thereto, various means may be realized such as an UI (User Interface) to allow the user to set the header information at the register 21.

In a case a frame is inputted after the header information of analysis-subjected protocol in stored in the register 21, the comparator 22 may compare if information recorded in the header of inputted frame is matched to the header information stored in the register 21. For example, assuming that the header information currently set at the register 21 is HDR-0 ∼HDR-n, and the header information present in a relevant header position of the inputted frame is HEADER-0 ∼HEADER-n, the comparator 22 may determine whether HDR-0 ∼HDR-n respectively match HEADER-0 ∼HEADER-n.

As a result of comparison, if the information recorded in the header of inputted frame is matched to the header information stored in the register 21, the interface logic unit 23 extracts the data of the frame and transmits the relevant data to where it is needed. The data extracted by the interface logic unit 23 may be variably processed depending on what purpose the relevant data is to be used. For example, in a case the user is currently testing for device development, the extracted data may be transmitted to an application used for test by the user. In this case, the relevant application may perform the function of transmitting a test frame to the hardware protocol stack 20.

Furthermore, in a case the user is currently developing a device for processing a multimedia data, the interface logic unit 23 may transmit the extracted data to a device decoding the multimedia data.

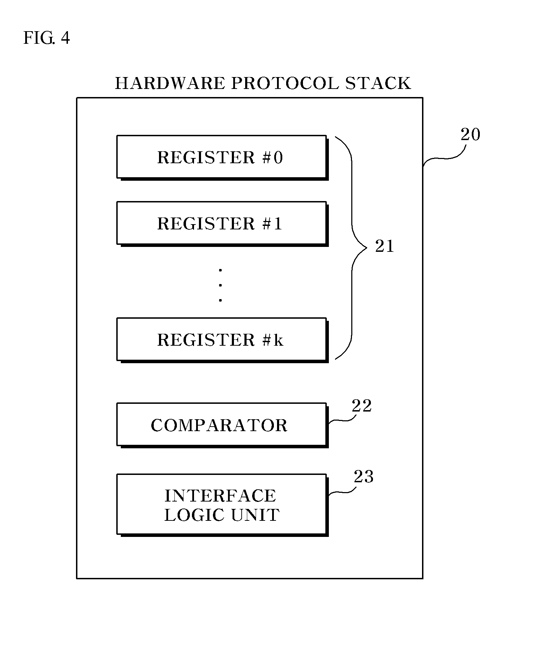

FIG.4 is a schematic conceptual view illustrating a hardware protocol stack according to another exemplary embodiment of the present disclosure.

Referring to FIG.4, the hardware protocol stack 20 may be disposed with a plurality of registers 21, where each register #0∼#k may be set up with mutually different header information.

In the exemplary embodiment, the comparator 22 may sequentially compare the information recorded in a header position of a frame being inputted with header information stored in the plurality of registers 21.

Now, it is assumed that header information set up at the register #0 are HDR-00∼HDR-0n, header information set up at the register #1 are HDR-10∼HDR-1n, header information set up at the register #k are HDR-k0∼HDR-kn, and header information present in a relevant header position of a frame being inputted are HEADER-0∼HEARDER-n. Hence, the comparator 22 determines whether HDR-00∼HDR-0n respectively match HEADER-0∼HEARDER-n, HDR-10∼HDR-1n respectively match HEADER-0∼HEARDER-n, and sequentially HDR-k0∼HDR-kn, respectively match HEADER-0∼HEARDER-n. In the midst of comparison, if the header information of current frame mutually matches header information stored in a register, further comparison may be stopped, and/or comparison with next register may be continuously conducted.

As a result of sequential comparison, if the header information of current frame mutually matches header information set up in a register, the interface logic unit 23 extracts data of the frame and transmits the relevant data to where it is required.

If the plurality of registers 21 is settable with mutually different pieces of header information, the user may develop a device capable of processing each protocol more conveniently when several other protocols are simultaneously developed.

If the user develops several different types of protocols, each protocol may be different, and several protocols may be mutually connected in a hierarchical structure. For example, protocols developed by the user may have several hierarchical structures including a physical hierarch, a link hierarch, a control hierarch and an application program hierarch, where head information corresponding to each hierarch may be set up in each register 21. Then, a package application may be possible dispensing with correction of register contents for processing for each hierarch at each time. In this case, the interface logic unit 23 may transmit the data extracted when each register is matched to mutually different places. That is, the interface logic unit 23 may transmit the extracted data to mutually different places, in a case the head information of currently inputted frame matches the #1 header information, and in a case the head information of currently inputted frame matches the #2 header information.

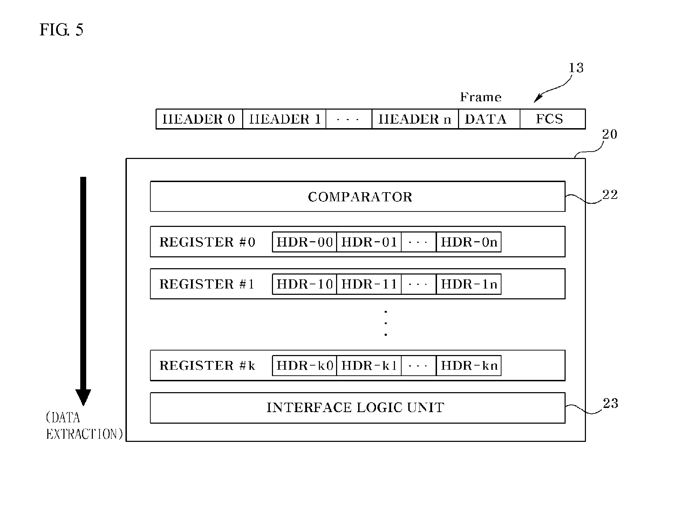

FIG.5 is a mimetic view illustrating a process of performing a frame interpretation when several registers are set up according to the present disclosure.

In a case a frame 13 is inputted, the comparator 22 searches for a frame matching to the header information stored in the relevant register sequentially starting from register #0 to register #k, and the interface logic unit 23 extracts the matched data of frame and transmits a relevant data to where it is required.

As described above, the data extracted by the interface logic unit may be divided and processed depending on data extracted when the data extracted from the interface logic unit 23 matches to the header information set up in the register as a result of comparison by the comparator 22.

The hardware protocol stack 20 according to each exemplary embodiment of the present disclosure thus described may be formed on a single IC (Integrated Circuit). That is, the register unit 21, the comparator 22 and the interface logic unit 23 may be formed on a single IC. It should be apparent to the skilled in the art that the single chip type IC may be configured in a shape including various constituent elements including an element of inputting the frame and an element of processing the data extracted by the interface logic unit 23. The hardware protocol stack 20 configured in a single chip type may be used to various devices that require processing of relevant protocols including network interface cards, digital TVs, media players and mobile terminals.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

## Claims

1. A hardware protocol stack, the hardware protocol stack **characterized by**:
a register unit (21) configured to store header information of protocol to be analyzed;
a comparator (22) configured to compare if information recorded in a header of inputted frame is matched to the header information stored in the register unit (21); and
an interface logic unit (23) configured to extract data of the frame in response to a comparative result by the comparator (22).

2. The hardware protocol stack of claim 1, **characterized in that** the register unit (21) is configured in a readable format.

3. The hardware protocol stack of claim 1 or 2, further **characterized by** an interface unit configured to set the header information in the register unit (21).

4. The hardware protocol stack of any one claim of 1 to 3, **characterized in that** the register unit (21) comprises a plurality of registers storing mutually different header information.

5. The hardware protocol stack of claim 4, **characterized in that** the comparator (22) sequentially compares the information restored in the header of inputted frame with the header information stored in the plurality of registers.

6. The hardware protocol stack of claim 4 or 5, **characterized in that** the interface logic unit (23) transmits each extracted data in response to a header information-matched register.

7. The hardware protocol stack of any one claim of 1 to 6, **characterized in that** the register unit (21), the comparator (22) and the interface logic unit (23) are formed on a single IC (Integrated Circuit).
